# EUROPEAN PATENT SPECIFICATION

(11) **EP 2 997 067 B1**
(45) Date of publication and mention of the grant of the patent: **10.06.2020**
(21) Application number: 14714880.3
(22) Date of filing: 10.03.2014
(51) Int. Cl.: C08G 59/50, C08G 59/68, C09D 163/00, C08G 59/18

(54) **HARDENERS FOR COLD-CURING EPOXY SYSTEMS**
HÄRTER FÜR KALTHÄRTENDE EPOXIDSYSTEME
DURCISSEURS POUR SYSTÈMES ÉPOXY DURCISSANT À FROID

(30) Priority: 17.05.2013 US 201361824411 P
(43) Date of publication of application: 23.03.2016
(73) Proprietor: Blue Cube IP LLC, Clayton, Missouri 63105 (US)
(72) Inventor: SCHROETZ, Markus, 88416 Ochsenhausen (DE); MICHALSKI, Eva-Maria, 76547 Sinzheim (DE); PFARHERR, Marcus, 88441 Mittelbiberach (DE); GRASSE, Michael M., 86757 Munzingen (DE); FRITSCHE, Christina, 88436 Eberhardzell (DE)
(74) Representative: Greaves Brewster LLP
(86) International application number: PCT/US2014/022611
(87) International publication number: WO 2014/186032

(56) References cited:
- EP-A1- 0 821 021
- EP-A1- 1 136 509
- WO-A1-2009/032099

## Description

### BACKGROUND OF THE INVENTION

### Field of the Invention

The present invention is related to cold curing epoxy systems. Specifically, the present invention is related to hardeners for cold curing epoxy systems.

### Introduction

Cold curing epoxy systems are suitable for a wide range of industrial applications, such as floorings, mortars, adhesives, coatings, lacquers, and paints. Most of the cold curing epoxy systems contain amine hardeners.

Typically, the amine hardener is produced as follows: a mixture of amines (A1 and A2), along with a solvent and accelerator are homogenized and heated to the appropriate reaction temperature. A difunctional liquid epoxy resin (LER) is then added to form adducts. Three types of adducts are formed by this process: A1-LER-A1, A2-LER-A2, and A1-LER-A2. It is not desirable to have the mixed adduct Al-LER-A2, since it can cause problems with technical performance. Mixed adducts are also generally not supported by most local regulations, such as the United States Toxic Substances Control Act (TSCA) or the Registration, Evaluation, Authorization and Restriction of Chemical Substances (REACH) of the European Union.

One potential solution is to have an adduct containing a first amine diluted with an adduct containing a second amine. However, with high adducted hardeners (hardeners with high loadings of LER), it can be difficult to impossible to adduct only the first or second amine. If a high adducted hardener only contains a small amount of one amine, the equivalent or molar ratio may be too high and it can produce a highly viscous or even a gelled material which is highly undesirable.

Therefore, a process that eliminates the formation of mixed adducts but also forms a product without any of the drawbacks listed above is needed.

EP 1136509 A1 discloses hardeners for epoxy resins, comprising amine adducts of an alkoxylated amine/polyepoxide reaction product, an epoxy resin and an epoxy-functional reactive diluent, which are free of unreacted amine.

WO 2009/032099 A1 discloses a multi-component curable composition which is reactive upon admixing of the components and wherein the composition comprises: A. a first component which comprises: (i) a first amine functional adduct which comprises the reaction product of a stoichiometric excess of a diamine and a compound having an epoxide group and an alpha, beta unsaturated carboxyl group; B. a second component which comprises: (i) at least one compound having an average of more than 2.0 groups per molecule which are reactive with amines.

EP 0821021 A1 discloses a water-dispersible hardener for epoxy resins, which indicates the end of the working time by means of a marked increase in viscosity.

### SUMMARY OF THE INVENTION

In a broad embodiment of the present invention, there is disclosed a process comprising, consisting of, or consisting essentially of: a) producing a first adduct comprising a reaction product of a difunctional epoxy and Isophrondiamine (IPDA); b) producing a second adduct comprising a reaction product of a difunctional epoxy and m-Xylylenediamine (MXDA) and c) contacting i) the first adduct; ii) the second adduct;iii) an accelerator; and iv) a modifier to form a hardener composition.

### DETAILED DESCRIPTION OF THE INVENTION

### Adducts

The first adduct comprises a reaction product of a difunctional epoxy and isophorone diamine (IPDA). The second adduct comprises a reaction product of a difunctional epoxy and m-xylylenediamine (MXDA).

Examples of epoxies that can be used include but are not limited to bisphenol A diglycidyl ether and bisphenol F diglycidyl ether.

In an embodiment, the amine component to form i) or ii) is generally used in molar excess compared to the difunctional epoxy or up to a maximum ratio of 1:1 mole, to ensure that the first and second adducts are aminofunctional molecules which also contain an unreacted amine.

In the first adduct, the IPDA component is present in an amount in the range of from 99 weight percent to 1 weight percent and the epoxy component is present in an amount in the range of from 1 weight percent to 50 weight percent, based on the total weight of the composition.

In the second adduct, the MXDA component is present in an amount in the range of from 99 weight percent to 50 weight percent and the epoxy component is present in an amount in the range of from 1 weight percent to 50 weight percent, based on the total weight of the composition.

Generally, one of ordinary skill in the art can determine the amount of the adduct components to use in the hardener formulation. The nature of the amine component used in the first and second adducts and the degree of the reaction with the difunctional epoxy component can strongly affect the viscosity of either adduct. If the first adduct is highly viscous, then less can be used in the hardener formulation. If the first adduct has a low viscosity, then more of the adduct can be used in the overall hardener formulation. If the second adduct is highly viscous, then less can be used in the hardener formulation. If the second adduct has a low viscosity, then more of the adduct can be used in the overall hardener formulation.

In an embodiment, the first adduct is present in the hardener composition in the range of from 1 weight percent to 99 weight percent, based on the total weight of the composition. The first adduct is present in the composition in the range of from 5 weight percent to 80 weight percent in another embodiment, and from 10 weight percent to 50 weight percent in yet another embodiment.

In an embodiment, the second adduct is present in the hardener composition in the range of from 1 weight percent to 99 weight percent, based on the total weight of the composition. The second adduct is present in the composition in the range of from 5 weight percent to 80 weight percent in another embodiment, and from 10 weight percent to 50 weight percent in yet another embodiment.

In an embodiment, the first adduct and second adduct are produced separately. Adduct formation takes place at elevated temperatures from 60 to 120°C controlling the reaction by addition speed. The addition speed depends mainly on the cooling power of the reactor used. In an embodiment, the temperature is in the range of from 75°C to 95°C. The reactor is charged with the amine and the difunctional epoxy is added while stirring. After the addition is finished, a post reaction of 20 to 40 minutes is performed. During the post reaction time the reaction between the difunctional epoxy and amine continues to completion, so that no unreacted epoxy remains in the reaction mixture.

The first adduct, second adduct, accelerator, and modifier (if desired) are then admixed in any combination or sub-combination. Since the first adduct and second adduct are added separately to the reaction mixture, no mixed adducts of type A1-LER-A2 are present in the mixture. As a high degree of adduction is desired in order to limit the content of free amine in the hardener, it is not favorable to adduct only amine 1 or amine 2, especially if the amount of one amine is much lower than the other, due to the fact that a) the adduct must be aminic and b) must have a viscosity in a technically manageable range.

### Accelerator

In an embodiment, the first adduct and second adduct are contacted with an accelerator. An accelerator is useful for accelerating the curing speed of the composition with an epoxy resin.

Examples of accelerators include, but are not limited to salicylic acid, calcium nitrate, bisphenol A, bisphenol F, mono - and dihydric phenols like resorcinol and hydroquinone or other carboxylic and/or phenolic group containing components.

The accelerator is generally present in the composition in the range of from 0.1 weight percent to 30 weight percent, based on the total weight of the composition.

### Modifier

In an embodiment, the components above can be contacted with a modifier. The modifier is useful for dilution and may accelerate the curing speed in combination with epoxy resins. The modifier can also enhance surface appearance.

Examples of modifiers include, but are not limited to (methyl) styrenated phenol, diisopropylnaphthalene, polyalkylene glycols, ethers of polyalkylene glycols, benzyl alcohol, and high boiling mono- or polyhydric alcohols.

The modifier is generally present in a range of from 0.1 weight percent to 60 weight percent, based on the total weight of the hardener composition.

### Third amine or Amine/Monofunctional Epoxy Adduct

Optionally, the mixture above may contain a third amine or an aminofunctional reaction product of the third amine with a monofunctional epoxy compound. The third amine or its aminofunctional adduct with a monofunctional epoxy can be useful for fine-tuning properties like surface appearance or chemical resistance of the cured coating.

Examples of the third amine include, but are not limited to aliphatic amines, cycloaliphatic amines, araliphatic amines or aromatic amines. Examples of the monofunctional epoxy compound include, but are not limited to epoxidized monohydric alcohols.

### Curable Composition Product

In an embodiment, a curable composition comprises, consists of, or consists essentially of: I) the hardener formed by the above-described process and II) an epoxy resin.

In an embodiment, the epoxy resin is a liquid epoxy resin. Examples of liquid epoxy resins that can be used include, but are not limited to bisphenol-A diglycidyl ethers (BADGE), bisphenol-F diglycidyl ethers (BFDGE), and epoxy novolacs. In another embodiment, the epoxy resin can be a solid bisphenol A epoxy resin.

The curable composition can be optionally diluted with reactive diluents such as for example cresyl glycidyl ether (CGE), p. t.-butylphenyl glycidyl ether (ptBPGE), C12/C14 glycidyl ether, butanediol diglycidyl ether (BDDGE), hexanediol- diglycidyl ether (HDDGE), branched glycidyl ethers such as C13/15 or C 12/14, alcohol glycidyl ether, and glycidyl esters such as Versatic Acid glycidyl esters.

In an embodiment, the hardener composition is present in an amount in the range of from 0.8 amine equivalents to 1.2 amine equivalents and the epoxy resin is present in an amount 0.8 epoxy equivalents to 1.2 epoxy equivalents. In an embodiment, the hardener component and the epoxy resin are mixed according to the hardener equivalent weight (HEW) and epoxide equivalent weight (EEW) to ensure that 1 equivalent of epoxy reacts with 1 equivalent amine hydrogen. The composition is cured at ambient temperature.

These compositions are generally used as primers for concrete and floorings.

### EXAMPLES

### Preparation of IPDA Adduct

1 gram of a mixture of IPDA with D.E.R. 331 (6 moles: 1 mole) was prepared at room temperature and was transferred via droplets into a DSC crucible, heated to 90°C and the heat flux was measured. After 35 minutes the reaction was considered to be finished.

On a larger scale, the amine was placed in a flask with heating jacket and stirrer and was heated. The liquid epoxy resin (LER) was added from above, the rate of addition was selected to maintain the temperature. If necessary, the flask was cooled by removing the heating jacket. After addition, the post reaction was performed for at least 35 minutes at the reaction temperature.

### Preparation of MXDA Adduct

1 gram of a mixture of MXDA with D.E.R. 331 (4 moles: 1 mole) was prepared at room temperature and a droplet transferred into a DSC crucible, heated to 80°C and the heat flux was measured. After 25 minutes the reaction was considered to be finished.

On a larger scale, the amine was placed in a flask with heating jacket and stirrer and was heated. The LER was then added from above, the rate of addition was to maintain the temperature. If necessary, the flask was cooled by removing the heating jacket. After addition, the post reaction was performed for at least 25 minutes at the reaction temperature.

The hardeners are prepared as follows:
For comparative example A: Benzyl alcohol was charged to a reactor, which was then heated. When the reactor temperature reached 40°C, salicylic acid was added and dissolved. IPD and MXDA were then charged to the reactor and the mixture was heated to 80-90°C. D.E.R. 331 was then added from above under stirring. After 1 hour, the batch was cooled to 50°C and discharged. In the hardener, adduct types of A1-LER-A1, A2-LER-A2 and A1-LER-A2 were present.

For the comparative example B: Benzyl alcohol was charged to a reactor, which was then heated. When the reactor temperature reached 40°C, IPD and MXDA were charged and the mixture was heated to 80-90°C. D.E.R. 331 was added from above under stirring after 1 hour, the batch was cooled to 50°C and discharged. In the hardener adduct types of A1-LER-A1, A2-LER-A2 and A1-LER-A2 were present.

For the comparative example C: Benzyl alcohol was charged to a reactor, which was then heated. When the reactor temperature reached 40°C, salicylic acid was added and dissolved. IPD, the IPDA-Adduct and MXDA were charged and the mixture was homogenized for 30 minutes and discharged. In the hardener, adduct types of A1-LER-A1 are present.

For the inventive example 1: Benzyl alcohol was charged to a reactor, which was then heated. When the reactor temperature reached 40°C, MXDA, the MXDA-adduct and the IPD-adduct was charged and the mixture was homogenized for 30 minutes and discharged. In the hardener, adduct types of A1-LER-A1, A2-LER-A2 are present.

The hardeners were mixed with D.E.R.™ 3531, a diluted epoxy resin which is a blend of Bisphenol A epoxy resin and Bisphenol F epoxy resin, with C12/C14 alcohol glycidyl ether as a reactive diluent, at 1 epoxy equivalent to 1 amine equivalent at room temperature to yield a curable composition.

2 mm films were cast after 2 minutes of homogenization of the resin/hardener by hand.

200 µm films were coated on glass, using an applicator frame.

Hardening conditions can be found in the corresponding tables.

**Table 1. Hardener Ingredients**

| | Examples | | | |
|---|---|---|---|---|
| | Comparative example A (in situ) | Comparative example B (blend) | Comparative example C (in situ) | Inventive example 1 (blend) |
| Benzyl alcohol | 40 | 40 | 40 | 40 |
| Salicylic acid | 5 | 5 | none | none |
| IPDA | 35 | 11.7 | 30 | 2 |
| LER (D.E.R. 331) | 10 | none | 15 | none |
| MXDA | 10 | 10 | 15 | 10.5 |
| IPDA-Adduct | none | 33.3 | none | 40 |
| MXDA-Adduct | none | none | none | 7,5 |
| | 100.0 | 100.0 | 100.0 | 100.0 |

All results are measured with D.E.R.™ 3531

**Table 2. ShoreD Hardness development**

| | Examples | | | |
|---|---|---|---|---|
| | Comp Ex A (in situ) | Comp Ex B (blend) | Comp Ex C (in situ) | Example 1 (blend) |
| After | Climate 23°C / 50% rH | | | |
| 16 h | 51 | 48 | 43 | 45 |
| 18 h | 56 | 53 | 53 | 50 |
| 24 h | 63 | 62 | 65 | 60 |
| 48 h | 72 | 71 | 73 | 70 |
| 7 d | 74 | 71 | 77 | 73 |

| After | Climate 13°C / 80% rH | | | |
|---|---|---|---|---|
| 16 h | Not measurable | 23 | Not measurable | Not measurable |
| 18 h | 25 | 29 | Not measurable | 24 |
| 24 h | 42 | 42 | 34 | 37 |
| 48 h | 65 | 69 | 63 | 67 |
| 7 d | 76 | 74 | 73 | 72 |

Table 3 shows the hardness development of the 2 mm cast thick layers. All results are measured with D.E.R. ™ 3531.

**Table 3. Pendulum hardness (Koenig)**

| | Examples | | | |
|---|---|---|---|---|
| | Comp Ex A (in situ) | Comp Ex B (blend) | Comp Ex C (in situ) | Example 1 (blend) |
| After | Climate 23°C / 50% rH | | | |
| 16 h | 20 | 23 | 27 | 24 |
| 18 h | 29 | 29 | 35 | 33 |
| 24 h | 42 | 45 | 52 | 52 |
| 48 h | 83 | 95 | 106 | 109 |
| 7 d | 146 | 147 | 143 | 134 |

| | Climate 13°C / 80% rh | | | |
|---|---|---|---|---|
| 16 h | Not measurable | Not measurable | Not measurable | Not measurable |
| 18 h | 8 | 6 | 5 | 6 |
| 24 h | 12 | 11 | 8 | 9 |
| 48 h | 41 | 43 | 29 | 35 |
| 7 d | 109 | 125 | 121 | 107 |

**Table 4. Early water spot resistance**

| | Examples | | | |
|---|---|---|---|---|
| | Comp Ex A (insitu) | Comp Ex B (blend) | Comp Ex C (insitu) | Example 1 (blend) |
| After | Climate 23°C / 50% rH | | | |
| 16 h | Very good | Very good | Very good | Very good |
| | Climate 13°C / 80% rH | | | |
| 16 h | Good | Good | fair | fair |

**Table 5. Tensile test**

| | Comp Ex A (in situ) | Comp Ex B (blend) | Comp Ex C (in situ) | Example 1 (blend) |
|---|---|---|---|---|
| | 7d at Climate 23°C / 50% rH | | | |
| Tensile strength | 32 N/mm² | 31 N/mm² | 39 N/mm² | 33 N/mm² |
| Elongation | 2.0 % | 1.8 % | 3.6 % | 2.0 % |

The test methods are listed in Table 6, below.

**Table 6. Test methods**

| Test | Dimension | Standard | Specimen |
|---|---|---|---|
| Hardness ShoreD | n.a. | DIN 53505 | d = 6mm |
| Hardness (Pendulum Koenig) | s | DIN 53157 | Film on glass plate (100-200 µm) |
| Tensile strength | N/mm² | EN ISO 527-2 | Type 1B |
| Elongation | % | EN ISO 527-2 | Type 1B |

The water drop test was performed as follows: a water drop is placed on the not fully cured surface, the water evaporates, leaving white carbamates on the surface. If not, the hardener is insensitive to the water drop, which is desired.

## Claims

1. A process comprising:
a) producing a first adduct comprising a reaction product of a difunctional epoxy and Isophrondiamine (IPDA);
b) producing a second adduct comprising a reaction product of a difunctional epoxy and m-Xylylenediamine (MXDA) and
c) contacting
i) the first adduct;
ii) the second adduct;
iii) an accelerator; and
iv) a modifier
to form a hardener composition.

2. A process in accordance with claim 1 wherein said difunctional epoxy is selected from the group consisting of bisphenol A diglycidyl ether and bisphenol F diglycidyl ether.

3. A process in accordance with claims 1 or 2 wherein said modifier is selected from the group consisting of benzyl alcohol, (methyl) styrenated phenol and diisopropylnaphthalene.

4. A process in accordance with any one of the preceding claims wherein said accelerator is selected from the group consisting of salicylic acid, calcium nitrate, mono phenols, and dihydric phenols.

5. A process in accordance with any one of the preceding claims wherein the difunctional epoxy is present in the first adduct in an amount in the range of from 1 weight percent to 35 weight percent and said IPDA is present in the first adduct in an amount in the range of from 99 weight percent to 65 weight percent, based on the total weight of said first adduct.

6. A process in accordance with any one of the preceding claims wherein the difunctional epoxy is present in the second adduct in an amount in the range of from 1 weight percent to 45 weight percent and said MXDA is present in the second adduct in an amount in the range of from 99 weight percent to 55 weight percent, based on the total weight of said second adduct.

7. A process in accordance with any one of the preceding claims wherein the first adduct is present in the hardener composition in an amount in the range of from 1 weight percent to 99 weight percent, the second adduct is present in an amount in the range of from 1 weight percent to 99 weight percent, the modifier is present in an amount in the range of from 0.1 weight percent to 60 weight percent, and the accelerator is present in an amount in the range of from 0.1 weight percent to 40 weight percent, based on the total weight of the hardener composition.

8. A process in accordance with any one of the preceding claims wherein a third amine or an aminofunctional reaction product of the third amine with a monofunctional epoxy compound is contacted with said first adduct, said second adduct, and said accelerator in step c).

9. A process in accordance with claim 8 wherein said third amine is selected from the group consisting of aliphatic amines, cycloaliphatic amines, araliphatic amines and aromatic amines, and wherein the monofuctional epoxy compound is an epoxidized monohydric alcohol.

## Patentansprüche

1. Verfahren, umfassend:
a) Herstellen eines ersten, ein Reaktionsprodukt eines difunktionalen Epoxids und Isophorondiamin (IPDA) umfassenden Addukts,
b) Herstellen eines zweiten, ein Reaktionsprodukt eines difunktionalen Epoxids und m-Xylylendiamin (MXDA) umfassenden Addukts und
c) Inkontaktbringen
i) des ersten Addukts,
ii) des zweiten Addukts,
iii) eines Beschleunigers und
iv) eines Modifikators
zur Bildung einer Härterzusammensetzung.

2. Verfahren nach Anspruch 1, wobei das difunktionale Epoxid ausgewählt ist aus der Gruppe, bestehend aus Bisphenol-A-diglycidylether und Bisphenol-F-diglycidylether.

3. Verfahren nach Anspruch 1 oder 2, wobei der Modifikator ausgewählt ist aus der Gruppe, bestehend aus Benzylalkohol, (Methyl) styrolisiertem Phenol und Diisopropylnaphthalin.

4. Verfahren nach einem der vorhergehenden Ansprüche, wobei der Beschleuniger ausgewählt ist aus der Gruppe, bestehend aus Salicylsäure, Calciumnitrat, Monophenolen und zweiwertigen Phenolen.

5. Verfahren nach einem der vorhergehenden Ansprüche, wobei das difunktionale Epoxid in dem ersten Addukt in einer Menge im Bereich von 1 Gew.-% bis 35 Gew.-% vorhanden ist und das IPDA in dem ersten Addukt in einer Menge im Bereich von 99 Gew.-% bis 65 Gew.-% vorhanden ist, bezogen auf das Gesamtgewicht des ersten Addukts.

6. Verfahren nach einem der vorhergehenden Ansprüche, wobei das difunktionale Epoxid in dem zweiten Addukt in einer Menge im Bereich von 1 Gew.-% bis 45 Gew.-% vorhanden ist und das MXDA in dem zweiten Addukt in einer Menge in einem Bereich von 99 Gew.-% bis 55 Gew.-% vorhanden ist, bezogen auf das Gesamtgewicht des zweiten Addukts.

7. Verfahren nach einem der vorhergehenden Ansprüche, wobei das erste Addukt in der Härterzusammensetzung in einer Menge im Bereich von 1 Gew.-% bis 99 Gew.-% vorhanden ist, das zweite Addukt in einer Menge im Bereich von 1 Gew.-% bis 99 Gew.-% vorhanden ist, der Modifikator in einer Menge im Bereich von 0,1 Gew.-% bis 60 Gew.-% vorhanden ist und der Beschleuniger in einer Menge im Bereich von 0,1 Gew.-% bis 40 Gew.- vorhanden ist, bezogen auf das Gesamtgewicht der Härterzusammensetzung.

8. Verfahren nach einem der vorhergehenden Ansprüche, wobei ein drittes Amin oder ein aminofunktionales Reaktionsprodukt des dritten Amins mit einer monofunktionalen Epoxidverbindung mit dem ersten Addukt, dem zweiten Addukt und dem Beschleuniger in Schritt c) kontaktiert wird.

9. Verfahren nach Anspruch 8, wobei das dritte Amin ausgewählt ist aus der Gruppe, bestehend aus aliphatischen Aminen, cycloaliphatischen Aminen, araliphatischen Aminen und aromatischen Aminen, und wobei die monofunktionale Epoxidverbindung ein epoxydierter einwertiger Alkohol ist.

## Revendications

1. Procédé comprenant :
a) la production d'un premier produit d'addition comprenant un produit de réaction d'un époxy difonctionnel et d'une isophrondiamine (IPDA) ;
b) la production d'un second produit d'addition comprenant un produit de réaction d'un époxy difonctionnel et m-xylylènediamine (MXDA) et
c) la mise en contact
i) du premier produit d'addition ;
ii) du second produit d'addition ;
iii) d'un accélérateur ; et
iv) d'un modificateur
afin de former une composition de durcissement.

2. Procédé selon la revendication 1 dans lequel ledit époxy difonctionnel est choisi dans le groupe constitué de l'éther diglycidylique de bisphénol A et de l'éther diglycidylique de bisphénol F.

3. Procédé selon la revendication 1 ou la revendication 2 dans lequel ledit modificateur est choisi dans le groupe constitué de l'alcool benzylique, du phénol (méthyl) styréné et du diisopropylnaphtalène.

4. Procédé selon l'une quelconque des revendications précédentes dans lequel ledit accélérateur est choisi dans le groupe constitué de l'acide salicylique, du nitrate de calcium, des monophénols et des phénols dihydriques.

5. Procédé selon l'une quelconque des revendications précédentes dans lequel l'époxy difonctionnel est présent dans le premier produit d'addition en une quantité dans la plage allant de 1 % en poids à 35 % en poids et ladite IPDA est présente dans le premier produit d'addition en une quantité dans la plage allant de 99 % en poids à 65 % en poids, en fonction du poids total dudit premier produit d'addition.

6. Procédé selon l'une quelconque des revendications précédentes dans lequel l'époxy difonctionnel est présent dans le second produit d'addition en une quantité dans la plage allant de 1 % en poids à 45 % en poids et ladite MXDA est présente dans le second produit d'addition en une quantité dans la plage allant de 99 % en poids à 55 % en poids, en fonction du poids total dudit second produit d'addition.

7. Procédé selon l'une quelconque des revendications précédentes dans lequel le premier produit d'addition est présent dans la composition de durcissement en une quantité dans la plage allant de 1 pour cent en poids à 99 % en poids, le second produit d'addition est présent en une quantité dans la plage allant de 1 % en poids à 99 % en poids, le modificateur est présent en une quantité dans la plage allant de 0,1 % en poids à 60 % en poids, et l'accélérateur est présent en une quantité dans la plage allant de 0,1 % en poids à 40 % en poids, en fonction du poids total de la composition de durcissement.

8. Procédé selon l'une quelconque des revendications précédentes dans lequel une troisième amine ou un produit de réaction amino-fonctionnel de la troisième amine avec un composé époxy monofonctionnel est mis en contact avec ledit premier produit d'addition, ledit second produit d'addition et ledit accélérateur dans l'étape c).

9. Procédé selon la revendication 8 dans lequel ladite troisième amine choisi dans le groupe constitué des amines aliphatiques, des amines cycloaliphatiques, des amines araliphatiques et des amines aromatiques, et dans lequel le composé époxy monofonctionnel est un alcool monohydrique époxydé.
